# EUROPEAN PATENT SPECIFICATION

(11) **EP 3 895 928 B1**
(45) Date of publication and mention of the grant of the patent: **23.11.2022**
(21) Application number: 20759650.3
(22) Date of filing: 23.01.2020
(51) Int. Cl.: B60K 35/00, C03C 3/087, C03C 27/12, B60J 1/00, B60J 1/02, G02B 27/01, B32B 17/10

(54) **HEAD-UP DISPLAY DEVICE**
HEAD-UP-ANZEIGEVORRICHTUNG
DISPOSITIF D'AFFICHAGE TÊTE HAUTE

(30) Priority: 19.02.2019 JP 2019027407
(43) Date of publication of application: 20.10.2021
(73) Proprietor: Central Glass Company, Limited, Ube-shi, Yamaguchi 755-0001 (JP)
(72) Inventor: MORI, Naoya, Matsusaka-shi, Mie 515-0001 (JP); IZUTANI, Kensuke, Matsusaka-shi, Mie 515-0001 (JP); NAKAMURA, Hiroki, Matsusaka-shi, Mie 515-0001 (JP)
(74) Representative: Mewburn Ellis LLP
(86) International application number: PCT/JP2020/002406
(87) International publication number: WO 2020/170711

(56) References cited:
- WO-A1-2013/039178
- WO-A1-2018/003416
- JP-A- H1 096 874
- JP-A- H02 141 720
- JP-A- H09 175 844
- JP-A- 2017 149 604
- JP-A- 2018 162 044
- US-A1- 2001 018 393
- US-A1- 2017 363 863
- Anonymous: "Polymer retardation film", Edmond Optics Japan Co., Ltd , 30 July 2019 (2019-07-30), page 1, XP055827433, Retrieved from the Internet: URL:https://www.ipros.jp/product/detail/20 00223025 [retrieved on 2020-04-02]

## Description

### TECHNICAL FIELD

The present invention relates to a head-up display (hereinafter, also referred to as "HUD") device that is mounted in a moving vehicle such as an automobile or aircraft and projects an image on a projection section in the front field of view of an occupant in the moving vehicle to enable the occupant to view the image.

### BACKGROUND ART

Windshields at the front of moving vehicles are used as the projection sections of HUD devices. The occupant views a virtual image based on a reflected image of projection light in the projection section. A first reflected image can be formed on the inside main surface in the projection section and a second reflected image can be formed on the outside main surface in the projection section. Thus, the virtual image appears as a double image to the occupant (for the mechanism of double image generation, see Non-Patent Literature 1). The light polarization-HUD type has been suggested as a means for reduction of such a double image (e.g., Patent Literatures 1, 2, and 3).

The light polarization-HUD type reduces a double image based on the following mechanism. The projection section is formed using a laminate including a first light transmissive plate made of a material such as glass and disposed at an inside of the vehicle, a second light transmissive plate disposed at an outside of the vehicle, and a half-wave plate disposed between the first light transmissive plate and the second light transmissive plate. The components of the laminate are controlled to have equal refractive indexes in the visible spectrum. Projection light is incident on the projection section at Brewster's angle.

When the projection light incident on the projection section includes S-polarized light, a reflected image is formed on the inside main surface of the first light transmissive plate. The projection light passing through the projection section is converted to P-polarized light by the half-wave plate. The P-polarized light, when reaching the outside main surface of the second light transmissive plate, is emitted to the outside without being reflected on the outside main surface. The occupant views a virtual image based on the reflected image of S-polarized light formed on the inside main surface of the first light transmissive plate. This type is referred to as the S-HUD type.

### CITATION LIST

### - Patent Literature

Patent Literature 1: JP H02-141720 A
Patent Literature 2: JP H09-175844 A
Patent Literature 3: JP H10-96874 A

### - Non-Patent Literature

Non-Patent Literature 1: "Development of New Active Driving Display", Mazda Technical Review, No.33 (2016), pp.60-65

### SUMMARY OF INVENTION

### - Technical Problem

The important component for double image reduction in the light polarization-HUD type is a half-wave plate, which is also called an optical rotator, provided to rotate the polarization direction of projection light incident on the projection section by 90 degrees. Conventional half-wave plates are yellowish plates as disclosed in Patent Literature 2. Thus, Patent Literature 2 suggests use of green glass plates in combination with such a yellowish half-wave plate so as to provide natural colors to the human eyes through the projection section.

Since the projection section is used as the windshield at the front of the moving vehicle, components used for the projection section are preferably colorless or nearly colorless. However, use of a colorless or nearly colorless half-wave plate can cause a double image.

Now, the polarized light is considered. Given X axis, Y axis, and Z axis in a space in which light travels along the Z axis, the polarized light is formed as a synthetic vector of a polarized light wave along the X axis and a polarized light wave along the Y axis. When the polarized light travels through a medium, a difference in propagation velocity between the polarized light wave along the X axis and the polarized light wave along the Y axis (the difference is typically caused by the refractive index difference) causes phase shifts of the polarized light waves. Depending on the phase shifts, the type of the polarized light varies. When the light incident on the medium is S-polarized light and the phases of the polarized light wave along the X axis and the polarized light wave along the Y axis are shifted by half of a wavelength in the medium, the S-polarized light is rotated by 90 degrees to be converted to P-polarized light.

The factors affecting the propagation velocity of polarized light waves, which are represented by refractive indexes, for example, change with wavelength. A medium with a constant "difference" between the above factors of the X axis and the factors of the Y axis in a certain light spectrum always converts polarized light incident on the medium to the same polarized light within the light spectrum. The "difference", however, is difficult to be constant in the visible spectrum.

What is meant by that the "difference" is difficult to be constant is easier to understand when a wavelength dispersion curve of the refractive index is considered. A medium with a higher refractive index has a dispersion curve that rises as the wavelength becomes shorter. Such a material having a dispersion curve that rises as the wavelength becomes shorter is referred to as a normal dispersion material. The rise is observable from near a wavelength of 400 nm. When the half-wave plate is a colorless or nearly colorless one, a phenomenon where S-polarized light, particularly some blue S-polarized light rays, is not converted to P-polarized light is more likely to occur. A yellowish half-wave plate as with the half-wave plate disclosed in Patent Literature 2 absorbs the blue light rays. A person skilled in the art therefore does not recognize the phenomenon where S-polarized light is not converted to P-polarized light as a problem. Thus, a half-wave plate, when it is colorless or nearly colorless, tends to have a region in which S-polarized light fails to be converted to P-polarized light, and this should be recognized as a new problem in HUD devices using a colorless or nearly colorless half-wave plate.

In response to the above issues, the present invention aims to provide a HUD device in which double images are reduced when the HUD device is the S-HUD type and includes a colorless or nearly colorless half-wave plate.

### - Solution to Problem

In other words, a head-up display device of the present invention is to be mounted in a moving vehicle and enables an occupant in the moving vehicle to view a virtual image based on a reflected image of S-polarized light in a projection section,
the head-up display device including:
an image projector configured to apply projection light including S-polarized light; and
the projection section on which the projection light is to be projected,
the projection section including laminated glass including a first glass plate defining a surface of the laminated glass on which the projection light is to be incident, a second glass plate defining a surface of the laminated glass from which the projection light is to be emitted, and a half-wave plate disposed between the first glass plate and the second glass plate,
the first glass plate and the second glass plate each being formed from a glass composition containing silicon oxide, iron oxide, and an alkali metal oxide,
at least one of the first glass plate or the second glass plate having a thickness of 0.3 mm to 3 mm, a total iron oxide content in terms of Fe₂O₃ in the glass composition of 0.2% by mass to 2.0% by mass, and a FeO content of 0.1% by mass to 0.5% by mass,
the half-wave plate having visible light transmissivity and being configured to transmit light with an a* value of -2.5 to 4.5 and a b* value of -1.0 to 7.0 in a CIE color system,
the reflected image being formed on a surface of the first glass plate which is to face an inside of the vehicle,
the second glass plate being configured to emit from a surface thereof which is to face an outside of the vehicle the projection light converted to P-polarized light.

Since the half-wave plate has visible light transmissivity and transmits light with an a* value of -2.5 to 4.5 and a b* value of -1.0 to 7.0 in a CIE color system, the half-wave plate is viewed as a colorless or nearly colorless one.

Thus, the projection section is advantageously used as a window of a moving vehicle. Furthermore, at least one of the first glass plate or the second glass plate has a total iron oxide content in terms of Fe₂O₃ in the glass composition of 0.2% by mass to 2.0% by mass and a FeO content of 0.1% by mass to 0.5% by mass. The glass plate(s) therefore absorb(s) light incident on the half-wave plate and having a wavelength in a range in which the conversion efficiency from S-polarized light to P-polarized light is low, leading to reduction of double images in the HUD device.

### - Advantageous Effects of Invention

The present invention can reduce double images in S-HUD type HUD devices. The present invention also can make the projection section used in the S-HUD type appear in a neutral color to the occupant, and make the projection section suitable as a window of a moving vehicle.

### BRIEF DESCRIPTION OF DRAWINGS

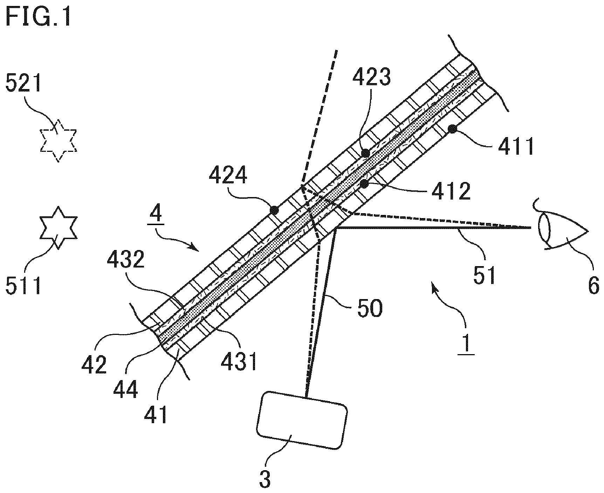

Fig. 1 is a schematic view showing the outline of a HUD device according to an embodiment of the present invention and an optical path in the device.

### DESCRIPTION OF EMBODIMENTS

The HUD device according to an embodiment of the present invention is described with reference to the drawings.

Fig. 1 is a schematic view showing the outline of a HUD device according to an embodiment of the present invention and an optical path in the device.

Fig. 1 shows the optical path of projection light with a solid line and the optical path of projection light causing a double image with a dotted line. A virtual image 521 forming a double image is also depicted with a dotted line.

In the HUD device 1, the projection section 4 includes a half-wave plate 44, a first glass plate 41 disposed closer to the inside of a moving vehicle, and a second glass plate 42 disposed closer to the outside of the moving vehicle. The first glass plate 41 and the second glass plate 42 are disposed opposite each other with the half-wave plate 44 therebetween.

An interlayer film 431 is sandwiched between the half-wave plate 44 and the first glass plate 41, and an interlayer film 432 is sandwiched between the half-wave plate 44 and the second glass plate 42.

The first glass plate 41 has a first main surface 411 which is to be exposed to the inside and a second main surface 412 opposite the first main surface. The second glass plate 42 has a fourth main surface 424 which is to be exposed to the outside and a third main surface 423 opposite the fourth main surface 424.

Projection light 50 is applied from an image projector 3 to the first main surface 411 to form a first reflected image on the first main surface 411. The first main surface 411 is a surface of the first glass plate 41 which is to face an inside of the vehicle.

An occupant 6 views a virtual image 511 based on the first reflected image and appearing in an extension of an optical path 51.

The HUD device according to an embodiment of the present invention is optically designed to enable observation of a virtual image based on the first reflected image. The HUD device is of the S-HUD type.

The HUD device according to an embodiment of the present invention utilizes projection light including S-polarized light.

Although projection light includes S-polarized light, this does not necessarily mean that the projection light includes S-polarized light when the light is emitted from the image projector. Projection light emitted from the image projector and including P-polarized light and S-polarized light may be converted by a polarizer to projection light including S-polarized light.

Examples of the projection light including P-polarized light and S-polarized light include randomly polarized light (unpolarized light), circularly polarized light, elliptically polarized light, mixed light of P-polarized light and S-polarized light, and linearly polarized light that is neither P-polarized light nor S-polarized light.

A polarizer disposed in the path of projection light can convert projection light including P-polarized light and S-polarized light to projection light including S-polarized light.

The mode is switched to the S-HUD type by adjusting projection light to be projection light including S-polarized light.

The polarizer is provided with a transmission window transmitting linearly polarized light oscillating in one direction, and is disposed with the transmission window faced in the direction in which the projection light travels.

The image projector can suitably be a projector capable of applying projection light including S-polarized light or projection light including P-polarized light and S-polarized light. Examples of such a projector include DMD projection system-based projectors, laser scanning MEMS projection system-based projectors, and reflective liquid crystal-based projectors.

In the HUD device according to an embodiment of the present invention, preferably, the projection light including S-polarized light is incident on the first main surface at Brewster's angle. The angle at which the projection light including S-polarized light is incident on the projection section may vary to some extent from Brewster's angle.

For example, the angle of incidence may be about Brewster's angle ± 10°.

In one example, when Brewster's angle is 56°, the projection light may be incident on the projection section at an angle of 46° to 66°.

Here, a reflected image is formed on the first main surface of the projection section, and the occupant in the moving vehicle views a virtual image based on the reflected image on the first main surface. Projection light passing through the first main surface and travelling in the projection section is converted to P-polarized light by the half-wave plate, and emitted from the fourth main surface of the second glass plate, i.e., emitted to the outside, as P-polarized light without being reflected on the fourth main surface of the projection section. This prevents double image generation.

Described below are the structures and materials to implement a preferred embodiment of the projection section used for the head-up display devices according to an embodiment of the present invention.

The projection section is defined by laminated glass including a first glass plate defining a surface of the laminated glass on which the projection light is to be incident, a second glass plate defining a surface of the laminated glass from which the projection light is to be emitted, and a half-wave plate disposed between the first glass plate and the second glass plate.

### <Glass plate>

The first glass plate and the second glass plate each are formed from a glass composition containing silicon oxide, iron oxide, and an alkali metal oxide.

The glass plate is preferably formed from soda-lime silicate glass having a glass composition defined in ISO 16293-1. In other words, soda-lime silicate glass having a glass composition defined in ISO 16293-1 and containing iron oxide is preferred.

Also, at least one of the first glass plate or the second glass plate has a thickness of 0.3 mm to 3 mm, a total iron oxide content in terms of Fe₂O₃ in the glass composition of 0.2% by mass to 2.0% by mass, and a FeO content of 0.1% by mass to 0.5% by mass.

Such glass is what is called green glass and absorbs light having a wavelength of around 400 nm. Thus, use of such glass as at least one of the glass plates enables absorption of light having a wavelength causing a double image.

A total iron oxide content in terms of Fe₂O₃ of 0.2% by mass to 2.0% by mass in the glass composition enables absorption of light having a wavelength causing a double image. Also, a FeO content of 0.1% by mass to 0.5% by mass causes the color of glass to change from yellow to green, providing a natural color to the glass.

In addition, preferably, one of the first glass plate and the second glass plate has a thickness of 0.3 mm to 3 mm, a total iron oxide content in terms of Fe₂O₃ in the glass composition of 0% by mass to 0.15% by mass, and a FeO content of 0% by mass to 0.05% by mass.

Such glass is what is called clear glass.

It is preferable that the clear glass is used as the first glass plate, i.e., the glass plate positioned at an inside of a vehicle.

Use of the clear glass as a surface of the laminated glass facing the inside of the vehicle can provide more natural RGB colors to the virtual image based on the first reflected image.

### <Half-wave plate>

The half-wave plate is disposed between the first glass plate and the second glass plate.

The half-wave plate may have a plate shape or a film shape.

Examples of the half-wave plate include retarders formed by uniaxially or biaxially extending a plastic film such as a polycarbonate film, a polyarylate film, a polyethersulfone film, or a cycloolefin polymer film, and retarders formed by aligning the liquid crystal polymer molecules in a certain direction and fixing them in the aligned state.

The polymer molecules are aligned, for example, by rubbing a transparent plastic film such as a polyester film or a cellulose film, or by forming an alignment film on a glass plate or a plastic film and subjecting the alignment film to rubbing or photo-alignment. The alignment is fixed, for example, by applying ultraviolet rays to an ultraviolet curable liquid crystal polymer in the presence of a photopolymerization initiator to cure the polymer through the polymerization reaction, by heating for crosslinking, or by aligning polymer molecules at high temperatures and quenching the polymer.

Any compound that is liquid crystalline when its molecules are aligned in a certain direction may be used as the liquid crystal polymer. For example, a compound that is in a twisted nematic alignment in its liquid crystal form and becomes glass at the liquid crystal transition temperature or lower can be used. Examples thereof include optically active main-chain liquid crystal polymers such as polyester, polyamide, polycarbonate, and polyester imide; optically active side-chain liquid crystal polymers such as polyacrylate, polymethacrylate, polymalonate, polysiloxane, and polyether; and polymerizable liquid crystal. The examples can also include polymer compositions obtained by adding an optically active low molecular or high molecular compound to an optically inactive main-chain polymer or an optically inactive side-chain polymer.

The half-wave plate has visible light transmissivity and is configured to transmit light with an a* value of - 2.5 to 4.5 and a b* value of -1.0 to 7.0 in a CIE color system. The half-wave plate preferably has a visible light transmittance that imparts a visible light transmittance of 70% or higher to the projection section 4, i.e., to the laminated glass. For example, the visible light transmittance of the half-wave plate may be 70% or higher, or 80% or higher. Here, the visible light transmittance refers to that obtained by the method defined in JIS R 3212 (2015). The visible light transmittance is measurable by a spectrophotometer (U-4100 available from Hitachi, Ltd.).

The a* and b* values of the transmitted light are calculatable using the above visible light transmittance by the method described in JIS Z 8781-4 (2013). Such a half-wave plate is considered to be a colorless or nearly colorless half-wave plate. The half-wave plate therefore has a color suited for use for a windshield provided at the front of a moving vehicle.

The half-wave plate preferably has a highest conversion rate from S-polarized light to P-polarized light in a light wavelength range of 500 nm to 600 nm.

The highest conversion rate from S-polarized light to P-polarized light in a light wavelength range of 500 nm to 600 nm means that the light wavelength range with the highest conversion rate is in the central range of the visible spectrum, so that S-polarized light is efficiently converted to P-polarized light throughout the visible spectrum.

When the light wavelength range with the highest conversion rate from S-polarized light to P-polarized light is at one end of the visible spectrum, the conversion rate at the other end is low.

The half-wave plate has only to be disposed between the first glass plate and the second glass plate. The half-wave plate may be sandwiched between two interlayer films disposed between the first glass plate and the second glass plate. Also, one interlayer film may be used, and the half-wave plate may be sandwiched between the interlayer film and one of the glass plates.

The interlayer film can be a resin interlayer film. The resin interlayer film is preferably a thermoplastic clear polymer. Examples of the polymer include polyvinyl butyral (PVB), ethylene vinyl acetate (EVA), acrylic resin (PMMA), urethane resin, polyethylene terephthalate (PET), and cycloolefin polymers (COP).

The surface of a resin interlayer film is usually embossed into uneven shape to prevent loss of transparency and bubble generation due to insufficient deaeration during lamination of glass plates into laminated glass. The present embodiment can also employ embossed resin interlayer films.

The resin interlayer film can be a partially colored one, one with a sound insulation layer sandwiched between layers, or one whose thickness is gradually changed. The resin interlayer film may also contain an ultraviolet absorber, an infrared absorber, an antioxidant, an antistatic agent, a heat stabilizer, a colorant, or an adhesion modifier as appropriate. The resin interlayer film may be extended under tension or passed between umbrella-shaped press rollers to be deformed into a fan shape.

### <Production procedure of laminated glass>

Described below is a suitable example of the method of producing laminated glass to be used as the projection section of the head-up display device of the present invention.

One of the glass plates is placed horizontally, and a half-wave plate sandwiched between interlayer films is stacked on the glass plate, followed by stacking of the other glass plate such that the half-wave plate is held between the one glass plate and the other glass plate. Thereby, a stack including the interlayer films and the half-wave plate sandwiched between the glass plates is produced.

When PVB is used as the resin interlayer films, the temperature and the humidity during the process are preferably maintained constant to keep the optimal moisture content of PVB. Then, the stack including the resin interlayer films sandwiched between the glass plates is heated to a temperature of 80°C to 100°C for preliminary bonding while the air existing between the glass plates and the resin interlayer films is deaerated. The stack is deaerated by, for example, a bag method of wrapping the stack of the glass plates and the resin interlayer films with a rubber bag made of a heat-resistant rubber, for example; a ring method of covering only the ends of the glass plates of the stack with rubber rings and sealing the stack; or a roller method of passing the stack between rollers to press the stack from the outermost two glass plates. Any of these methods may be used.

After the preliminary bonding, the resulting laminate is taken out of the rubber bag in the case of the bag method, or the rubber rings are removed from the laminate in the case of the ring method. The laminate is then placed in an autoclave for heating and pressurization (final bonding) where the laminate is heated at a temperature of 120°C to 150°C and the pressure in the autoclave is 10 to 15 kg/cm² for 20 to 40 minutes. After this process, the autoclave is cooled to a temperature of 50°C or lower and depressurized, and the resulting laminated glass is taken out of the autoclave.

The half-wave plate has only to be disposed in a region where a reflected image is formed, and the area of the half-wave plate may be the same as or smaller than the area of each glass plate.

### EXAMPLES

Various laminated glass samples were produced using glass plates with different total iron oxide contents in terms of Fe₂O₃. S-polarized light was incident on each of the laminated glass samples, and the relationship between the total iron oxide contents in terms of Fe₂O₃ and double images was evaluated. The following shows the evaluation procedure.

### Production of laminated glass

The following glass plates having different total iron oxide contents in terms of Fe₂O₃, each with a glass composition containing silicon oxide, iron oxide, and an alkali metal oxide, were prepared: a glass plate 1 (total iron oxide content: 0.483% by mass, FeO content: 0.193% by mass); a glass plate 2 (total iron oxide content: 0.358% by mass, FeO content: 0.130% by mass); a glass plate 3 (total iron oxide content: 0.065% by mass, FeO content: 0.028% by mass); and a glass plate 4 (total iron oxide content: 2.055% by mass, FeO content: 0.736% by mass).

Next, laminates each were produced by laminating, between two glass plates (each having a size of 100 mm × 100 mm and a plate thickness of 2 mm), components in the order of a clear PVB interlayer film (S-LEC Film HI RZN-10 available from Sekisui Chemical Co., Ltd., thickness: 0.38 mm), a half-wave plate (polymer retarder #88-256 available from Edmund Optics Japan Ltd., retardation: 1/2λ, a* = 0.18, b* = 0.54), and a clear PVB interlayer film (S-LEC Film HI RZN-10 available from Sekisui Chemical Co., Ltd., thickness: 0.38 mm).

Each laminate was then placed in an autoclave and deaerated in a vacuum bag, followed by pressurization and heating at about 90°C and 0.25 MPa for about 10 minutes. Thereby, laminated glass samples including any of the glass plates 1 to 4 in combination were produced.

### Method of evaluating double image

A light source with a linearly polarizing plate (SHLP44 available from MeCan Imaging Inc.) for application of S-polarized light was set on the screen of iPad Pro^{®} (A1670 available from Apple Inc.). Projection light for a white grid image was projected on the surface of each laminated glass sample facing the inside of the vehicle at an incident angle of 56°. Whether or not a double image formed by projection light emitted from the laminated glass sample to the inside was viewed was visually evaluated. The evaluation criteria were Good (a double image was not viewed at all or was faintly viewed at a level causing no problem in practical use) and Bad (a double image was clearly viewed).

In addition, the outside scenery was looked through the laminated glass sample from the inside to visually evaluate whether or not the outside scenery can be viewed without any problem. The evaluation criteria were Good (the outside scenery was viewed without any problem) and Bad (the outside scenery was not viewed).

### (Example 1)

When a laminated glass sample whose two glass plates were the glass plates 1 (total iron oxide content: 0.483% by mass) was visually evaluated, no double image was viewed. Thus, the laminated glass sample was evaluated as Good (a double image was not viewed at all or was faintly viewed at a level causing no problem in practical use). Also, when the outside scenery was viewed through the laminated glass sample from the inside, the outside scenery was viewed without any problem. The laminated glass sample was therefore evaluated as Good also in this item.

### (Example 2)

When a laminated glass sample whose two glass plates were the glass plates 2 (total iron oxide content: 0.358% by mass) was visually evaluated, no double image was viewed. Thus, the laminated glass sample was evaluated as Good (a double image was not viewed at all or was faintly viewed at a level causing no problem in practical use). Also, when the outside scenery was viewed through the laminated glass sample from the inside, the outside scenery was viewed without any problem. The laminated glass sample was therefore evaluated as Good also in this item.

### (Comparative Example 1)

When a laminated glass sample whose two glass plates were the glass plates 3 (total iron oxide content: 0.065% by mass) was visually evaluated, a double image was clearly viewed. Thus, the laminated glass sample was evaluated as Bad (a double image was clearly viewed). Also, when the outside scenery was viewed through the laminated glass sample from the inside, the outside scenery was viewed without any problem. The laminated glass sample was therefore evaluated as Good in this item.

### (Comparative Example 2)

When a laminated glass sample whose two glass plates were the glass plates 4 (total iron oxide content: 2.055% by mass) was visually evaluated, no double image was viewed. Thus, the laminated glass sample was evaluated as Good (a double image was not viewed at all or was faintly viewed at a level causing no problem in practical use).

Also, when the outside scenery was viewed through the laminated glass sample from the inside, the outside scenery was not viewed. The laminated glass sample was therefore considered inappropriate for use in a head-up display device to be mounted in a moving vehicle, and evaluated as Bad in this item.

### (Example 3-1)

A laminated glass sample including glass plates with different total iron oxide contents in terms of Fe₂O₃ was produced using the glass plate 3 (total iron oxide content: 0.065% by mass) as a first glass plate (inside) and the glass plate 2 (total iron oxide content: 0.358% by mass) as a second glass plate (outside). The laminated glass sample was subjected to the double image evaluation.

Visual evaluation of the laminated glass sample resulted in viewing of a faint double image at a level that causes no problem in practical use. Thus, the laminated glass sample was evaluated as Good (a double image was not viewed at all or was faintly viewed at a level causing no problem in practical use). Also, when the outside scenery was viewed through the laminated glass sample from the inside, the outside scenery was viewed without any problem. The laminated glass sample was therefore evaluated as Good in this item.

### (Example 3-2)

A laminated glass sample was produced using the glass plate 2 (total iron oxide content: 0.358% by mass) as a first glass plate (inside) and the glass plate 3 (total iron oxide content: 0.065% by mass) as a second glass plate (outside), conversely from Example 3-1. The laminated glass sample was subjected to the double image evaluation.

Visual evaluation of the laminated glass sample resulted in viewing of a faint double image at a level that causes no problem in practical use. Thus, the laminated glass sample was evaluated as Good (a double image was not viewed at all or was faintly viewed at a level causing no problem in practical use). Also, when the outside scenery was viewed through the laminated glass sample from the inside, the outside scenery was viewed without any problem. The laminated glass sample was therefore evaluated as Good in this item.

Comparison of Example 3-1 and Example 3-2 shows that Example 3-1 in which the glass having a lower total iron oxide content (glass plate 3) was used as the first glass plate (inside) enabled clear viewing of the projection light as compared with Example 3-2. This is presumably because the low total iron oxide content of the first glass plate caused a high transparency of the background of the projection light, so that the projection light was clearly viewable.

Also, the laminated glass sample in each of Examples 3-1 and 3-2 had a higher transparency than those in Examples 1 and 2 and enabled clearer viewing of the projection light than those in Examples 1 and 2. Example 3-1, among Examples 1, 2, 3-1, and 3-2, achieved the clearest viewing of the projection light.

The results of Example 3-1 and Example 3-2 confirmed that even when one of the glass plates has a total iron oxide content in terms of Fe₂O₃ of lower than 0.2% by mass, double images can be reduced or prevented as long as the other glass plate has a total iron oxide content of 0.2% by mass to 2.0% by mass.

In this case, it is suitable to use a glass plate having a low total iron oxide content in terms of Fe₂O₃ of 0% by mass to 0.15% by mass as the inside glass plate such that the projection light is clearly viewable.

The following table summarizes the results.

**[Table 1]**

| | Glass plate composition | | | | Evaluation | | |
|---|---|---|---|---|---|---|---|
| | First glass plate (inside) | Total iron oxide content (% by mass) | Second glass plate (outside) | Total iron oxide content (% by mass) | Visual evaluation (double image) | Visual evaluation (outside viewability) | Note |
| Example 1 | Glass plate 1 | 0.483 | Glass plate 1 | 0.483 | Good | Good | |
| Example 2 | Glass plate 2 | 0.358 | Glass plate 2 | 0.358 | Good | Good | |
| Example 3-1 | Glass plate 3 | 0.065 | Glass plate 2 | 0.358 | Good | Good | Projection light viewability in Example 3-1 was better than that in Example 3-2 |
| Example 3-2 | Glass plate 2 | 0.358 | Glass plate 3 | 0.065 | Good | Good | |
| Comparative Example 1 | Glass plate 3 | 0.065 | Glass plate 3 | 0.065 | Bad | Good | |
| Comparative Example 2 | Glass plate 4 | 2.055 | Glass plate 4 | 2.055 | Good | Bad | |

### INDUSTRIAL APPLICABILITY

The present invention can provide a HUD device in which double images of projection light projected on the windshield of a vehicle such as an automobile are reduced.

### REFERENCE SIGNS LIST

- 1: HUD device
- 3: image projector
- 4: projection section
- 6: occupant
- 41: first glass plate
- 411: first main surface
- 412: second main surface
- 42: second glass plate
- 423: third main surface
- 424: fourth main surface
- 431, 432: interlayer film
- 44: half-wave plate
- 50: projection light
- 51: optical path based on first reflected image
- 511: virtual image based on first reflected image
- 521: virtual image forming double image

## Claims

1. A head-up display device that is to be mounted in a moving vehicle and enables an occupant in the moving vehicle to view a virtual image based on a reflected image of S-polarized light in a projection section,
the head-up display device comprising:
an image projector configured to apply projection light including S-polarized light; and
the projection section on which the projection light is to be projected,
the projection section comprising laminated glass including a first glass plate defining a surface of the laminated glass on which the projection light is to be incident, a second glass plate defining a surface of the laminated glass from which the projection light is to be emitted, and a half-wave plate disposed between the first glass plate and the second glass plate,
the first glass plate and the second glass plate each being formed from a glass composition containing silicon oxide, iron oxide, and an alkali metal oxide,
at least one of the first glass plate or the second glass plate having a thickness of 0.3 mm to 3 mm, a total iron oxide content in terms of Fe₂O₃ in the glass composition of 0.2% by mass to 2.0% by mass, and a FeO content of 0.1% by mass to 0.5% by mass,
the half-wave plate having visible light transmissivity and being configured to transmit light with an a* value of -2.5 to 4.5 and a b* value of -1.0 to 7.0 in a CIE color system,
the reflected image being formed on a surface of the first glass plate which is to face an inside of the vehicle,
the second glass plate being configured to emit from a surface thereof which is to face an outside of the vehicle the projection light converted to P-polarized light.

2. The head-up display device according to claim 1,
wherein one of the first glass plate and the second glass plate has a thickness of 0.3 mm to 3 mm, a total iron oxide content in terms of Fe₂O₃ in the glass composition of 0% by mass to 0.15% by mass, and a FeO content of 0% by mass to 0.05% by mass.

3. The head-up display device according to claim 2,
wherein the first glass plate has a thickness of 0.3 mm to 3 mm, a total iron oxide content in terms of Fe₂O₃ in the glass composition of 0% by mass to 0.15% by mass, and a FeO content of 0% by mass to 0.05% by mass.

4. The head-up display device according to any one of claims 1 to 3,
wherein the first glass plate and the second glass plate each are formed from soda-lime silicate glass having a glass composition defined in ISO 16293-1.

5. The head-up display device according to any one of claims 1 to 4,
wherein the half-wave plate has a highest conversion rate from S-polarized light to P-polarized light in a light wavelength range of 500 nm to 600 nm.

6. The head-up display device according to any one of claims 1 to 5,
wherein the laminated glass has a visible light transmittance of 70% or higher.

## Patentansprüche

1. Head-up-Anzeigevorrichtung zur Anbringung in einem sich bewegenden Fahrzeug, das es einem Insassen des sich bewegenden Fahrzeug ermöglicht, ein virtuelles Bild basierend auf einem reflektierten Bild von S-polarisiertem Licht in einem Projektionsabschnitt zu sehen,
wobei die Head-up-Anzeigevorrichtung Folgendes umfasst:
einen Bildprojektor, der ausgelegt ist, um Projektionslicht, das S-polarisiertes Licht umfasst, zu beaufschlagen; und
den Projektionsabschnitt, auf den das Projektionslicht zu projizieren ist,
wobei der Projektionsabschnitt laminiertes Glas umfasst, das eine erste Glasplatte, die eine Oberfläche des laminierten Glases, auf die das Projektionslicht einfallen soll, definiert, eine zweite Glasplatte, die eine Oberfläche des laminierten Glases, von der das Projektionslicht ausgesendet werden soll, definiert, und eine Halbwellenplatte, die zwischen der ersten Glasplatte und der zweiten Glasplatte angeordnet ist, umfasst,
wobei die erste Glasplatte und die zweite Glasplatte jeweils aus einer Glaszusammensetzung ausgebildet sind, die Siliciumoxid, Eisenoxid und ein Alkalimetalloxid enthält,
wobei zumindest eine aus der ersten Glasplatte oder der zweiten Glasplatte eine Dicke von 0,3 mm bis 3 mm, einen auf Fe₂O₃ bezogenen Eisenoxidgesamtgehalt in der Glaszusammensetzung von 0,2 Massen-% bis 2,0 Massen-% und einen FeO-Gehalt von 0,1 Massen-% bis 0,5 Massen-% aufweist,
wobei die Halbwellenplatte eine Transmissivität für sichtbares Licht aufweist und ausgelegt ist, um Licht mit einem a*-Wert von -2,5 bis 4,5 und einem b*-Wert von -1,0 bis 7,0 in einem CIE-Farbesystem zu transmittieren,
wobei das reflektierte Bild auf einer Oberfläche der ersten Glasplatte ausgebildet ist, die dem Inneren des Fahrzeugs zugewandt ist,
wobei die zweite Glasplatte ausgelegt ist, um von einer Oberfläche derselben, die dem Äußeren des Fahrzeugs zugewandt ist, das in P-polarisiertes Licht umgewandelte Projektionslicht auszusenden.

2. Head-up-Anzeigevorrichtung nach Anspruch 1,
wobei eine aus der ersten Glasplatte und der zweiten Glasplatte eine Dicke von 0,3 mm bis 3 mm, einen auf Fe₂O₃ bezogenen Eisenoxidgesamtgehalt in der Glaszusammensetzung von 0 Massen-% bis 0,15 Massen-% und einen FeO-Gehalt von 0 Massen-% bis 0,05 Massen-% aufweist.

3. Head-up-Anzeigevorrichtung nach Anspruch 2,
wobei die erste Glasplatte eine Dicke von 0,3 mm bis 3 mm, einen auf Fe₂O₃ bezogenen Eisenoxidgesamtgehalt in der Glaszusammensetzung von 0 Massen-% bis 0,15 Massen-% und einen FeO-Gehalt von 0 Massen-% bis 0,05 Massen-% aufweist.

4. Head-up-Anzeigevorrichtung nach einem der Ansprüche 1 bis 3,
wobei die erste Glasplatte und die zweite Glasplatte jeweils aus Natronkalksilikatglas mit einer Glaszusammensetzung gemäß der Definition von ISO 16293-1 ausgebildet sind.

5. Head-up-Anzeigevorrichtung nach einem der Ansprüche 1 bis 4,
wobei die Halbwellenplatte die höchste Umwandlungsrate von S-polarisiertem Licht in P-polarisiertes Licht in einem Lichtwellenlängenbereich von 500 nm bis 600 nm aufweist.

6. Head-up-Anzeigevorrichtung nach einem der Ansprüche 1 bis 5,
wobei das laminierte Glas einen Transmissionsgrad für sichtbares Licht von 70 % oder mehr aufweist.

## Revendications

1. Dispositif d'affichage tête haute qui est destiné à être monté dans un véhicule mobile et permet à un occupant dans le véhicule mobile de visualiser une image virtuelle sur la base d'une image réfléchie de lumière polarisée S dans une section de projection,
le dispositif d'affichage tête haute comprenant :
un projecteur d'image configuré pour appliquer une lumière de projection comprenant une lumière polarisée S ; et
la section de projection sur laquelle la lumière de projection doit être projetée,
la section de projection comprenant un verre feuilleté comprenant une première plaque de verre définissant une surface du verre feuilleté sur laquelle la lumière de projection doit être incidente, une deuxième plaque de verre définissant une surface du verre feuilleté depuis laquelle la lumière de projection doit être émise, et une lame demi-onde disposée entre la première plaque de verre et la deuxième plaque de verre,
la première plaque de verre et la deuxième plaque de verre étant chacune formées d'une composition de verre contenant de l'oxyde de silicium, de l'oxyde de fer, et un oxyde de métal alcalin,
au moins l'une de la première plaque de verre ou la deuxième plaque de verre ayant une épaisseur de 0,3 mm à 3 mm, une teneur totale en oxyde de fer en termes de Fe₂O₃ dans la composition de verre de 0,2 % en masse à 2,0 % en masse, et une teneur en FeO de 0,1 % en masse à 0,5 % en masse,
la lame demi-onde ayant une transmissivité de lumière visible et étant configurée pour transmettre de la lumière avec une valeur a* de -2,5 à 4,5 et une valeur b* de -1,0 à 7,0 dans un système de couleurs CIE,
l'image réfléchie étant formée sur une surface de la première plaque de verre qui doit faire face à l'intérieur du véhicule,
la deuxième plaque de verre étant configurée pour émettre, depuis une surface de celle-ci qui doit faire face à l'extérieur du véhicule, la lumière de projection convertie en lumière polarisée P.

2. Dispositif d'affichage tête haute selon la revendication 1,
dans lequel l'une de la première plaque de verre et la deuxième plaque de verre a une épaisseur de 0,3 mm à 3 mm, une teneur totale en oxyde de fer en termes de Fe₂O₃ dans la composition de verre de 0 % en masse à 0,15 % en masse, et une teneur en FeO de 0 % en masse à 0,05 % en masse.

3. Dispositif d'affichage tête haute selon la revendication 2,
dans lequel la première plaque de verre a une épaisseur de 0,3 mm à 3 mm, une teneur totale en oxyde de fer en termes de Fe₂O₃ dans la composition de verre de 0 % en masse à 0,15 % en masse, et une teneur en FeO de 0 % en masse à 0,05 % en masse.

4. Dispositif d'affichage tête haute selon l'une quelconque des revendications 1 à 3,
dans lequel la première plaque de verre et la deuxième plaque de verre sont chacune formées de verre de silicate sodocalcique ayant une composition de verre définie dans l'ISO 16293-1.

5. Dispositif d'affichage tête haute selon l'une quelconque des revendications 1 à 4,
dans lequel la lame demi-onde présente un taux de conversion maximal de lumière polarisée S en lumière polarisée P dans une plage de longueur d'onde de lumière de 500 nm à 600 nm.

6. Dispositif d'affichage tête haute selon l'une quelconque des revendications 1 à 5,
dans lequel le verre feuilleté présente une transmittance de lumière visible de 70 % ou plus.
